(19) **Europäisches Patentamt**

**European Patent Office**

**Office européen des brevets**

(11) **EP 1 418 782 B1**

(12) **EUROPEAN PATENT SPECIFICATION**

(45) Date of publication and mention
of the grant of the patent:
**12.04.2006 Bulletin 2006/15**

(51) Int Cl.:
**H04Q 7/38** (2006.01)

(21) Application number: **02425675.2**

(22) Date of filing: **06.11.2002**

(54) **Quality of service (QoS) based traffic load management method in a mobile communication network having multiple radio access technologies**

Auf Dienstgüte (QoS) basierendes Verfahren für Verkehrslastmanagement in einem mobilen Kommunikationsnetzwerk mit mehreren Funkzugangstechnologien

Procédé de gestion de charge de trafic basée sur la qualité du service (QoS) dans un réseau de télécommunication mobile ayant de multiples technologies d'accès radio

(84) Designated Contracting States:
**AT BE BG CH CY CZ DE DK EE ES FI FR GB GR IE IT LI LU MC NL PT SE SK TR**

(43) Date of publication of application:
**12.05.2004 Bulletin 2004/20**

(73) Proprietor: **Siemens Mobile Communications S.p.A.**
**20126 Milano (IT)**

(72) Inventor: **Meago, Francesco**
**23100 Sondrio (IT)**

(56) References cited:
**WO-A-00/38465** **WO-A-02/43429**
**US-A1- 2002 142 749**

- **"3GPP TR 25.891 v0.1.1: 3rd Generation Partnership Project; Technical Specification Group Radio Access Network; Improvement of RRM across RNS and RNS/BSS (Post Rel-5); (Release 6)" 3GPP TR 25.891 V0.1.1, October 2002 (2002-10), pages 1-21, XP002227867**
- **"Universal Mobile Telecommunications System (UMTS); UTRAN Iu Interface RNSAP Signalling (3GPP TS 25.413 version 5.0.0 Release 5); pages 1-12, 26-36, 63-68, 103-105, 114-116" ETSI TS 125 413 V5.0.0, March 2002 (2002-03), pages 1-20, XP002227868**
- **"Universal Mobile Telecommunications System (UMTS); UTRAN Iur Interface RNSAP Signalling (3GPP TS 25.423 version 5.0.0 Release 5); pages 1-18, 79-91, 147, 160-162, 181, 192, 198" ETSI TS 125 423 V5.0.0, March 2002 (2002-03), pages 1-39, XP002227869**

## Description

## FIELD OF THE INVENTION

The present invention relates to the field of Public Land Mobile Networks (PLMN) and more precisely to a QoS based traffic load management method in a multi-RAT network.

## BACKGROUND ART

With the next introduction of 3rd Generation UMTS (Universal Mobile Telecommunication System) systems the multi-RAT (Radio Access Technology) opportunities will be putted in foreground. The former 2nd Generation PLMN (Public Land Mobile Network) includes: GSM 900 MHz, DCS 1800 MHz (Digital Cellular System), GSM EDGE (Enhanced Data rates for GSM Evolution), GPRS (General Packet Radio Service); PCS (Personal Communication System), etc. In the new 3rd Generation UMTS two CDMA radio access techniques have been defined, respectively known as: TDD (Time Division Duplex) UTRA (UMTS Terrestrial Radio Access), in which transmission directions are distinguished in the time domain, and FDD (Frequency Division Duplex) UTRA, in which transmission directions are distinguished in the frequency domain. The FDD UTRA is used by the WCDMA (Wide band Code Division Multiple Access) system. The TDD UTRA technique foresees in its turn two options: a HCR (High Chip Rate) TDD of 3.84 Mcps, and a LCR (Low Chip Rate) TDD of 1.28 Mcps. The Applicant and CWTS (Chinese Wireless Telecommunication Standards) committee are furthermore engaged in the development of a TD-SCDMA (Time Division - Synchronous Code Division Multiple Access), standard which is based on the 3GPP 1.28 Mcps TDD physical layer and on the reuse of the GSM-GPRS higher layer functions and procedures, offering the operators a technology able to run on most of the deployed GSM network elements.

Both 2nd and 3rd Generation PLMNs are standardized by international authorities whose aim is that of making the operation of the systems of the various manufacturers each other compatible. In particular: GSM is described in the relevant Technical Reports (TR) issued by the Special Mobile Group (SMG) of the European Telecommunications Standards Institute (ETSI), while UMTS is described in the Technical Specifications (TS) issued by the 3rd Generation Partnership Project (3GPP) in the ambit of the ITU-T (International Telecommunication Union). At the time of writing, the SMG does not exist anymore and the related GSM work has been taken over by 3GPP that incorporate standardisation of both GSM and UMTS systems.

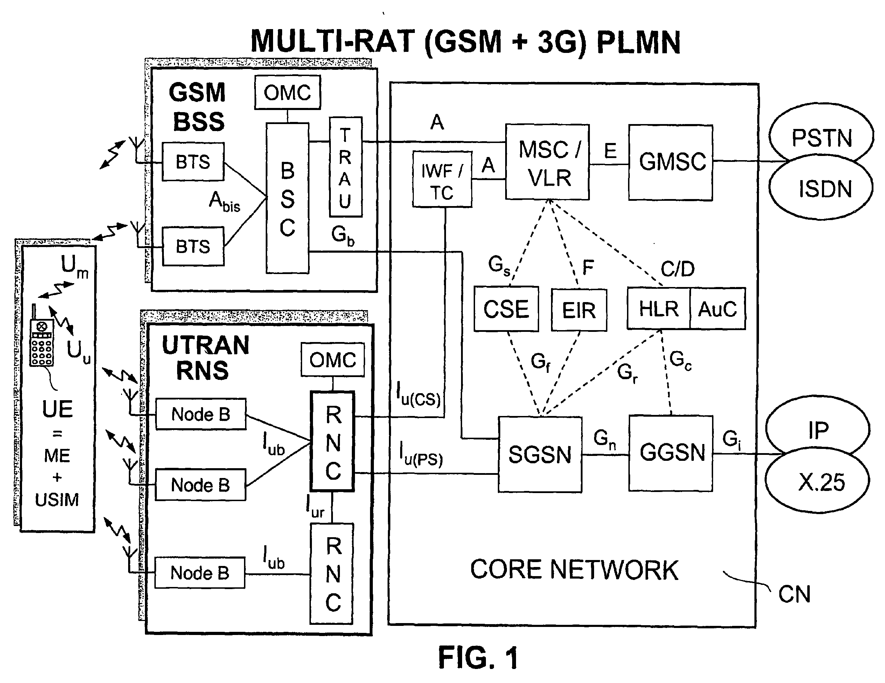

Fig.1 shows a multi-RAT (Radio Access Technology) PLMN that will be soon completed in Europe. The new Universal Mobile Telecommunications System (UMTS) shares the existing GSM (Global System for Mobile communications) Core Network CN with the GPRS service. The Core Network CN is connected to one or more BSS (Base Station Subsystem) of the GSM, and to one or more RNS (Radio Network Subsystem) of an UTRAN (Universal Terrestrial Radio Access Network). The UMTS system of fig.1 is described in the TS 23.002 (CN) and TS 25.401 (UTRAN). Both the UTRAN and BSS are connected, on air, to a plurality of User Equipment UE, each including a Mobile Equipment ME with a respective USIM card (UMTS Subscriber Identity Module). Without limitation, an UE can be either of the single or multistandard type. The UTRAN includes a plurality of Node B blocks each connected to a respective Radio Network Controller RNC by means of an Iub interfaces. A node B includes a Base Transceiver Station BTS connected to the UEs through an on-air Uu interface. The upper RNC is a Serving S-RNC connected to the Core Network CN by means of a first Iu(CS) interface for Circuits Switched and a second Iu(PS) interface for Packet Switched of the GPRS. It is also connected to an Operation and Maintenance Centre (OMC). The RNC placed below can be a Drift D-RNC and is connected to the upper S-RNC by means of an Iur interface. The UTRAN with the served UEs constitute a Radio Network Subsystem (RNS) disclosed in TS 23.110.

The GSM - BSS block includes a plurality of BTSs connected to a Base Station Controller BSC by means of an Abis Interface and to the UEs through an on-air Um interface. The BSC is interfaced to the Core Network CN by means of a Gb interface (packet switched) and is further connected to a Transcoder and Rate Adaptor Unit TRAU also connected to the Core Network CN through an A interface. It is also connected to an Operation and Maintenance Centre (OMC).

The CN network includes the following Network Elements: Switching Centre MSC / Visitor Location Register VLR, Gateway MSC GMSC, Interworking Function IWF / Transcoder TC, Camel Service Environment CSE, Equipment Identity Register EIR, Home Location Register HLR, Authentication Centre AuC, Serving GPRS Support Node SGSN, and Gateway GPRS Support Node GGSN. The following interfaces are visible inside the CN block: A, E, Gs, F, C, D, Gf, Gr, Gc, Gn, and Gi. The IWF block translates the Iu(CS) interface into the A interface towards MSC / VLR block. The TC element performs the transcoding function for speech compression/expansion concerning UTRAN (differently from GSM where this function is performed outside the CN network) also connected to the MSC block through the A interface. The GMSC is connected to the MSC / VLR through the E interface and to a Public Switched Telephone Network PSTN and an Integrated Services Digital Network ISDN. Blocks CSE, EIR, HLR, AUC are connected to the MSC / VLR through, in order, the Gs, F, C, and D interfaces, and to the SGSN node through the Gf and Gr interfaces. The SGSN block is interfaced at one side to the S-RNC inside UTRAN block by means of the Iu(PS) interface, and to the BSC inside the GSM-BSS block through the Gb interface. At the other side the SGSN node is interfaced to the GGSN node through the Gn interface. The last block is connected through the Gi interface to a packet data switching network of the IP (Internet Protocol) type and/or the X.25 type. The Core Network CN of fig.1 consists of an enhanced GSM Phase 2+, as described in TS 23.101, with a Circuit Switched CS part and a packet Switched part (GPRS). Another important Phase 2+ is the CAMEL (Customised Application for Mobile network Enhanced Logic) Application Part (CAP) used between the MSC and CSE for Intelligent Network (IN) applications. CAP is described in TS 29.078.

In operation, the MSC, so as the SGSN node, keep records of the individual locations of the mobiles and performs the safety and access control functions. More BSS and RNS blocks are connected to the CN Network, which is able to perform intrasystem handovers between adjacent RNSs or between adjacent BSSs, and intersystem handovers between a RNS and an adjacent BSS. With respect of GSM, UTRAN further improves data service by making possible greater throughputs and the asymmetrical traffic typical of the Internet Protocol (IP). The network of fig.1, which only represents a minimal part of a world-wide network, shall allow the routing of a telephone call inside an International UMTS / GSM Service Area subdivided into National Service Areas. By way of the hierarchical structure of the UMTS network, each National Service Area is subdivided into the following nested domains of decreasing area: PLMN Service Area; MSC / SGSN Service Area; Location Area LA (CS-domain) uniquely defined by its LAI (Location Area Identity) code; Routing Area RA inside the SGSN Service Area as a subset of the CS Location Area; Cell Area where the UE is actually located in the radio coverage of a target Node B or BTS.

Many protocols are deputed to govern the exchange of information at the various interfaces of the multi-RAT network of fig.1. These protocols are largely based on the Open System Interconnection (OSI) Reference Model for CCITT (Comité Consultatif International Télégraphique et Téléphonique) Applications (Rec. X.200). The OSI model is partitioned into seven layers. From the point of view of a particular layer, the adjacent lower layer provides a "transfer service" with specific features. The way in which the lower layer is realised is immaterial to the next higher layer. Correspondingly, the lower layer is not concerned with the meaning of the information coming from the higher layer or the reason for its transfer. Historically the problem of designing a well reliable signalling system has been posed in the PSTNs domain. For this aim a CCITT Signalling System N° 7 has been developed to provide an internationally standardised general purpose Common Channel Signalling (CCS) system. CCS is a signalling method in which a single channel conveys, by means of labelled messages, signalling information relating to, for example, a multiplicity of circuits, or other information such as that used for network management. Common Channel Signalling can be regarded as a form of data communication that is specialised for various types of signalling and information transfer between processors in telecommunications networks. The signalling system uses signalling links for transfer of signalling messages between telephone exchanges or other nodes in the telecommunication network served by the system. Relevant SS7 standards are published, and regularly updated, as ITU-T Q.7xx Recommendations. SS7 signalling as been gradually enriched with new functions suitable for the incoming digital PLMNs, the Intelligent Networks, and the Packet Switch service. To support PLMNs a Mobile Application Part (MAP) has been developed by ETSI. MAP (TS 29.002) is the most important Level 4 Application Part, because regulates the mobility aspects of the users. Typical MAP functions are, e.g.: updating and clearance of VLR location information, storing of routing information in the HLR register, delivery & updating of user profiles in the HLR and VLR, IMEI (International Mobile Equipment Identity) check, Inter-MSC handover, etc.

The general protocol architecture of the signalling used in the network includes an Access Stratum with a superimposed Non-Access Stratum (NAS). The Access Stratum includes Interface protocols and Radio protocols for exchanging User data and control information between the CN and the UE. These protocols contain mechanisms for transfer NAS message transparently, i.e. the so-called Direct Transfer DT procedures. The NAS stratum includes higher levels protocols to handle control aspects, such as: Connection Management CM, Mobility Management MM, GPRS Mobility Management GMM, Session Management SM, Short Message Service SMS, etc. Said general protocol architecture is designed in horizontal layers and vertical planes, taken as logically independent of each other. At the various RAT interfaces, two main horizontal layers are present: an upper Radio Network Layer and a lower Transport Network Layer, in the latter is present the Physical Layer corresponding to the Level 1. Three vertical planes are generally present, respectively: a Control Plane, a User Plane, and a Transport Network Control Plane. The User Plane includes the Data Stream(s) and the data Bearer(s) for the Data Stream(s). Each data stream is characterised by one or more frame protocols specified for that interfaces. The User Plane is used to transport all user data, e.g.: speech data or packet data. The Control Plane includes several Application Protocols used for all control signalling which is procedure specific. The Control Plane also includes the Signalling Bearer(s) for transporting the Application Protocols messages. The Transport Network Control Plane is used for all control signalling within the Transport Network Layer; it does not contain any Radio Network Layer information. The Transport Network Control Plane acts as plane between the Control Plane and the User Plane, it enables the Application Protocols in the Control Plane to be total independent of the technology selected for data bearer in the User Plane. The Layer 1 functions are those to interface to the physical medium (e.g.: optical fibre, radio link, copper cable) to offer the clock extraction capability and transmission quality control. The physical medium shall comply with some well known standards, i.e. SDH, SONET, Ex, Tx, etc. In the ATM (Asynchronous Transfer Mode) is used on Layer 2 of the UTRAN Transport Network Layer; to say, for all 3 Planes of the Iu (TS 25.412), Iur (TS 25.422) and Iub (TS 25.432) interfaces. The ATM mode enables the transmission of Real Time (RT) data, such as speech & video, as well as of Non-Real Time (NRT) data, such as packet data, computer files and graphics.

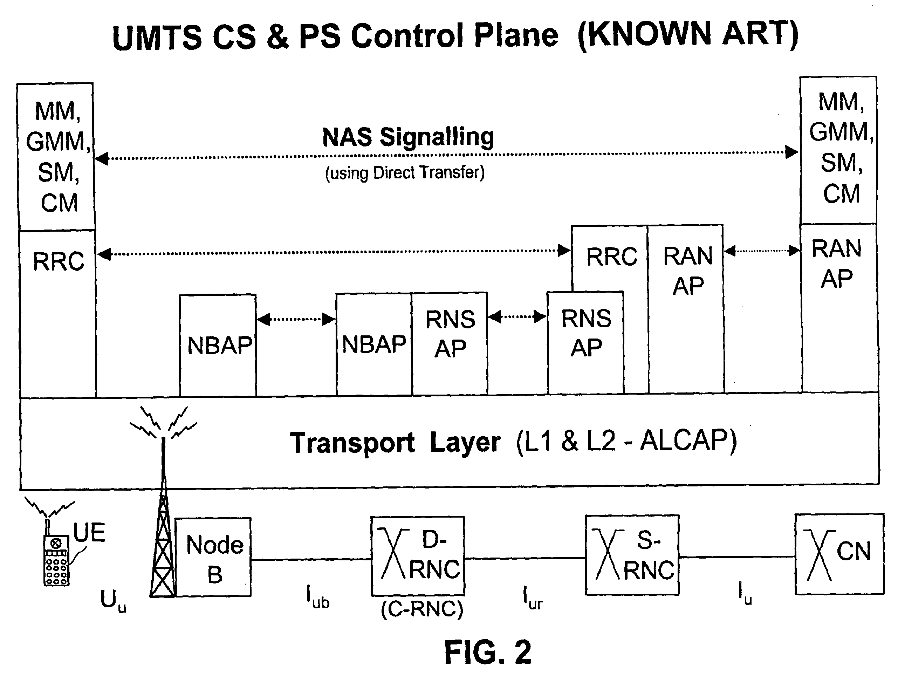

Fig.2 shows the main protocol stacks of the CS and PS Control Plane referred, without limitation, to the only UMTS network of fig.1. A similar figure exists even for the GSM part. At the bottom of fig.2 the following elements: UE, Node B, D-RNC, S-RNC, CN and the respective interfaces Uu, Iub, Iur, Iu [Iu(CS), Iu(PS)] are depicted. The bottom part of the Control Plane includes the Transport Layer upon which the Radio Protocols and the protocols of the Non Access Stratum reside. The Transport Layer includes the elements of the Transport Network Layer, to say: the L1 and L2 layers and an Access Link Control Application Part (ALCAP). The NAS protocols are also indicated in fig.2. With reference to the **fig.2**, the Transport Plane on the Uu interface is the same as described in the User Plane, it consists of Level 1 UTRA FDD or TDD mode and Level 2 protocols MAC (Medium Access Control) and RLC (Radio Link Control). The Transport Plane on the Iub, Iur and Iu interfaces again consists of the same Level 1 as described in the User Plane. ATM and AAL1-3 are used as Layer 2 signalling protocols, in particular the ALCAP application part. The indicated Radio Protocols are the following: RRC (Radio Resource Protocol), NBAP (Node B Application Part), RNSAP (Radio Network Subsystem Application Part), RANAP (Radio Access Network Application Part). In operation, RRC is used as Layer 3 protocol for control information transfer between the UE and UTRAN. RRC message carry all information required to set-up, modify, or release Radio Links (RL), which carry in their payload higher layer NAS signalling and enable UE mobility in RRC Connected mode. NBAP is used as Layer 3 protocol on the Iub interface. It carries common signalling or dedicated signalling between C-RNC and Node Bs. RNSAP is used as Layer 3 protocol on the Iur interface. It supports basic inter-RNC mobility and DCH traffic, as well as CCH traffic transmission. RANAP is used as Layer 3 protocol on the Iu interface. It is used for signalling between UTRAN and the Core network CN. RANAP is responsible on Iu for e.g.: Paging, RAB (RAdio Bearer) management, S-RNC relocation, security and overload control, and the NAS signalling transfer. The indicated NAS Protocols are the following: MM (Mobility Management), GMM (GPRS MM), SM (Session Management), and CM (Connection Management). MM supports function such as: UE attach / detach, security functions, and location/routing area updates. SM supports Packet Data Protocol (PDP) context activation / de-activation for PS connections. CM is used for Circuit Switched Call Control, Supplementary Services, and SMS support. Besides, RANAP and RRC contain Direct Transfer procedures for transparent NAS message transfer between UEs and the Core Network CN.

The main purpose of the network of **fig.1** is that to route speech signals and packet data among different points of a wide geographical network assuring in the meanwhile the possibly best Quality of Service (QoS) to the end user. QoS is an important aspect of the GSM and UMTS specification, consequently. To reach a prefixed QoS a lot of parameters are continuously measured and the measures reported to the various entities involved in this task, both for uplink and downlink. In the following some examples of QoS concepts are given for GPRS and UMTS. GPRS QoS is specified in **GSM 02.60** and **GSM 03.60.** An individual QoS profile is associated with each PDP (Packet Data Protocol) context. The QoS profile is considered to be a single parameter with multiple data transfer attributes. It defines the quality of service expected in terms the following attributes:

- precedence class,
- delay class,
- reliability class,
- peak throughput class, and
- mean throughput class.

There are many possible QoS profiles defined by the combinations of the attributes. A PLMN may support only a limited subset of the possible QoS profiles. During the QoS profile negotiation defined in subclause "Activation Procedures", it shall be possible for the MS (Mobile Station, presently considered as the UE) to request a value for each of the QoS attributes, including the HLR-stored subscribed default values. The network shall negotiate each attribute to a level that is in accordance with the available GPRS resources. The network shall always attempt to provide adequate resources to support the negotiated QoS profiles.

The service precedence class indicates the relative importance of maintaining the service commitments under abnormal conditions, for example which packets are discarded in the event of problems such as limited resources or network congestion. The precedence classes are defined in High, Medium, and Low priority.

The delay class defines the maximum values for the mean delay and 95-percentile delay to be incurred by the transfer of data through the GPRS network(s). The delay parameter defines the end-to-end transfer delay incurred in the transmission of SDUs (Service Data Unit) through the GPRS network(s). This includes the radio channel access delay (on uplink) or radio channel scheduling delay (on downlink), the radio channel transit delay (uplink and/or downlink paths) and the GPRS-network transit delay (multiple hops). It does not include transfer delays in external networks. Four delay classes exist. As a minimum the PLMN shall support the best effort delay class 4.

The reliability class defines the probability of loss, duplication, mis-sequencing or corruption of SDUs.

The peak throughput is measured in units of octets per second. It specifies the maximum rate at which data is expected to be transferred across the network for an individual PDP context. There is no guarantee that this peak rate can be achieved or sustained for any time period, this depends upon the MS capability and available radio resources. The network may limit the subscriber to the negotiated peak data rate, even if additional transmission capacity is available. The peak throughput is independent of the delay class, which determines the per-packet GPRS network transit delay.

The mean throughput is measured in units of octets per hour. It specifies the average rate at which data is expected to be transferred across the GPRS network during the remaining lifetime of an activated PDP context. The network may limit the subscriber to the negotiated mean data rate (e.g., for flat-rate charging), even if additional transmission capacity is available. A "best effort" mean throughput class may be negotiated, and means that throughput shall be made available to the MS on a per need and availability basis.

UMTS QoS is specified in **TS 23.107**. There are four different QoS classes:

- conversational class;
- streaming class;
- interactive class; and
- background class.

The main distinguishing factor between these QoS classes is how delay sensitive the traffic is: Conversational class is meant for traffic which is very delay sensitive while Background class is the most delay insensitive traffic class.

Conversational class mainly regards telephony speech (e.g. GSM). But with Internet and multimedia a number of new applications will require this scheme, for example voice over IP and video conferencing tools. The maximum transfer delay is given by the human perception of video and audio conversation. Therefore the limit for acceptable transfer delay is very strict, as failure to provide low enough transfer delay will result in unacceptable lack of quality. The transfer delay requirement is therefore both significantly lower and more stringent than the round trip delay of the interactive traffic case.

Streaming class is characterised by that the time relations (variation) between information entities (i.e. samples, packets) within a flow shall be preserved, although it does not have any requirements on low transfer delay. As the stream normally is time aligned at the receiving end (in the user equipment), the highest acceptable delay variation over the transmission media is given by the capability of the time alignment function of the application. Acceptable delay variation is thus much greater than the delay variation given by the limits of human perception.

Interactive class is applied when the end-user, that is either a machine or a human, is on line requesting data from remote equipment (e.g. a server). Examples of human interaction with the remote equipment are: web browsing, data base retrieval, server access. Examples of machines interaction with remote equipment are: polling for measurement records and automatic data base enquiries (telemachines). Interactive traffic is the other classical data communication scheme that on an overall level is characterised by the request response pattern of the end-user. At the message destination there is an entity expecting the message (response) within a certain time. Round trip delay time is therefore one of the key attributes. Another characteristic is that the content of the packets shall be transparently transferred (with low bit error rate).

Background class is applied when the end-user, which typically is a computer, sends and receives data-files in the background, this scheme applies. Examples are background delivery of E-mails, SMS, and download of databases and reception of measurement records. Background traffic is one of the classical data communication schemes that on an overall level is characterised by that the destination is not expecting the data within a certain time. The scheme is thus more or less delivery time insensitive. Another characteristic is that the content of the packets shall be transparently transferred (with low bit error rate).

## APPROACH TO THE TECHNICAL PROBLEM

Traffic load in the cells may seriously affect QoS either directly or indirectly. A traffic congestion situation directly affects the overall QoS if the incoming calls are to be refused, so as handovers towards the congested cell. The congestion indirectly affects the experienced QoS when the network is forced to downgrade the actual quality in order to add up new traffic. For example, in the old GSM a cell load dependent activation of Half Rate (HR) channels TCH/H instead of Full Rate TCH/F can be implemented within a cell where dual rate channels are configured. In a more sophisticated way an Adaptive Multi Rate (AMR) code is provided both for GSM and UMTS. To be able to prevent the side effects of traffic congestion, cell capacity and load information is exchanged in relation to RT (real time) and NRT (non-real time) traffic. These are the two main classes in which all the said OoS classes can be schematised. More in particular, RT traffic corresponds to the Conversational and Streaming traffic classes, while NRT traffic corresponds to the Interactive and Background traffic classes. With the UMTS advent the QoS problems that are traffic related assume a wider breath, because the traffic load can be checked on overlapping cells from radio technologies different from the traditional GSM.

The international patent application **WO 02/43429 A1,** tilted: "VARIABLE TRANSMISSION RATE SERVICES IN A RADIO ACCESS NETWORK" discloses a method suitable to be implemented in a mobile radio communication system including a core network and a radio access network including a first RAN node as a serving radio network controller (SRNC) coupled to an SRNC radio base station and a second RAN node as a drift radio network controller (DRNC) coupled to a DRNC radio base station, wherein the user equipment unit communicates with one or more base stations over the radio interface, and wherein the connection to the user equipment unit is established via the SRNC, the DRNC, and the DRNC base station, the method further comprising:

- monitoring a load condition in a cell corresponding to the DRNC base station;
- based on the load condition in the cell, making a first request that the SRNC changes the bit rate for a specific connection; and
- the SRNC changes the bit rate for the connection in response to the first request.

A Transport Format Set (TFS) specifies some permitted bitrates inside the cells to be selected from time-to-time by the single connection. However the method is limited as follows:

- it is triggered by an overload condition inside the cell of the DRNC domain without a concrete arrangement to prevent it.
- Its tasks are limited to the transmission rate control for single connections.
- In order to resolve the overload situation, the method does not consider the existence of neighbouring cells of the same or different technology where load and/or QoS conditions are not so critical.

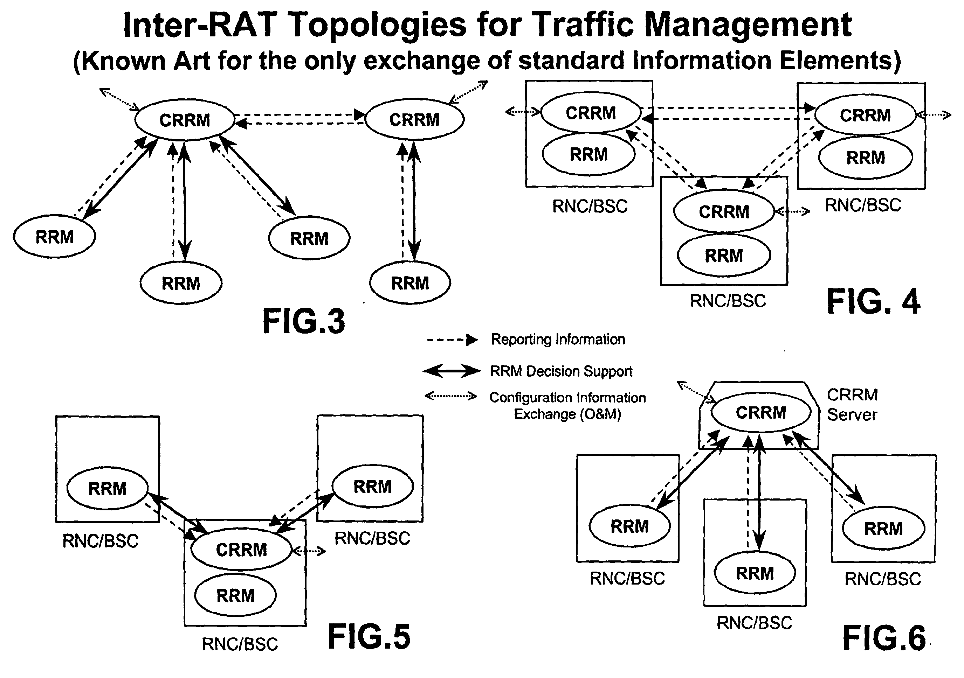

Inter RAT exchange of cell load information for traffic management is the subject of the following described 3GPP **TR 25.891**, titled: "Improvement of RRM across RNS and RNS/BSS (Release 6)". In this document a functional model is proposed in which the whole set of radio resources for an operator is considered to be partitioned into "radio resource pools". Making reference to the **fig.3** these radio resource pools are controlled by two different types of functional entities:

- RRM entity: functional entity responsible for Radio Resource Management of one radio resource pool, i.e. this characterises the radio resource pool;
- CRRM entity: functional entity responsible for a Common Radio Resource Management, i.e. coordination of overlapping/neighbour radio resource pools controlled by different RRM entities. This new CRRM entity is introduced to allow some kind of coordination among different radio resource pools whose radio resources are linked to the same geographic area in the network.

Interfaces and functions are foreseen between a CRRM entity and one or more RRM entities and between two CRRM entities, but not between two RRM entities directly. Information on other systems (e.g. inter system measurements GSM/UTRAN) can be retrieved through either the Core Network interfaces or the Iur-g interface between RNC and BSC. The functional relationships between the entities of the functional model are based on two types of functions: Reporting Information and RRM Decision Support. Interactions of CRRM and RRM with O&M (Operation and Maintenance) for the exchange of configuration information are possible. With reference to the **Figures 4, 5,** and **6** the following CRRM topologies are provided:

1. CRRM integrated into every RNC/BSC (**fig.4**);
2. CRRM integrated only in some RNC/BSCs (**fig.5**);
3. CRRM as a stand-alone server (**fig.6**).

The approach illustrated in **fig.4** is characterised by the co-location of RRM and responsible CRRM entities. The functional interface between RRM and CRRM is not realised as an open interface in this solution. Only "Reporting Information" is exchanged over open interfaces. The depicted solution allows transferring cell capacity and load information from one RNC to one BSC and vice versa using the information exchange / common measurement procedures via the Iur-g, or handover / relocation procedures via A / Iu interface. Within the UTRAN the information exchange / common measurement procedures on Iur can be used. Only "Reporting Information" function on the interface between different CRRM entities is standardised (mainly as a cell load exchange). The "Reporting Information" function between CRRM and RRM entities and the "RRM Decision Support" is vendor specific since the CRRM entity must be integrated in every RNC/BSC which has to support CRRM. The approach illustrated in **fig.5** is characterised by the co-location of CRRM with RRM for only one RNC/BSC. This integrated solution is allowing for open interfaces between RRM and CRRM (for the cases where RRM is not co-located with CRRM). The approach illustrated in **fig.6** implements RRM and CRRM entities into separate nodes. All of the interfaces among RRMs and CRRMs are open.

Thanks to the different topologies of the **Figures 3-6** an effective CRRM policy based approach is possible for load management. The introduction of an open interface between CRRM and both RNS and BSS allows the collection of traffic load information from the several RNCs/BSCs for the aim of taking optimal decisions concerning Handovers and, in an equivalent way for data, Cell Reselections. CRRM entity is not supposed to be consulted for channel switching or for soft handover, since the RRM in RNC/BSC shall handle these cases. The considered handovers are of the following type: between two RNCs; between two BSCs; between an RNC and a BSC, and vice versa, and more in general between two radio network controllers of different RATs. The basic idea behind the "Policy-based CRRM approach" is the standardisation of parameters and information exchange over an open interface between RRM and CRRM entities. This would enable the CRRM entity to provide CRRM policies to the RRM entities, thus allowing the traffic situation in the network to be dynamically adjusted on the basis of a common strategy. In this proposal the CRRM entity only acts as an advisor, so that the RRM entities still take the final decisions (RRM is the master), but based on parameters adjusted by CRRM. According to this policy, while the RRM entities take the fast decision required for each Access Request or Handover Request, the CRRM entity works at a slower time scale and provides policies to the RRM entities whenever an update is necessary. In this sense the frequency for a policy update depends on the traffic variations within the involved cells. The updating frequency can also be subject to configuration. The CRRM entity would be able to work on a faster time scale than O&M, in order to dynamically react to traffic load variations in overlapping radio resource pools. The "CRRM policy based approach" describes the functional relationship between CRRM and RRM by three functions:

1. CRRM triggers RRM to report measurement/load information or RRM reports initiated by the RRM entity itself.
2. CRRM can inform RRM about CRRM related information (e.g.: cell capacity and load situation of neighbour cells which are not under control of this RRM function.
3. CRRM sets load targets for the RRM functions for which the CRRM entity is responsible.

This can be obtained by the following four procedures:

- Measurement Initiating Procedure (CRRM initiated): CRRM triggers RRM to report a load measurement for a cell which is controlled by this RRM function. The report characteristics may be e.g. periodic, on demand, or event driven (e.g. by a load level).The possibility to report load measurements for more than 1 cell at one time should be allowed.
- Measurement Reporting Procedure (RRM initiated): Here the RRM may report load measurements per measurement object to the CRRM which is responsible for this RRM.
- Neighbour Cell CRRM Information Procedure (CRRM initiated): Based on the measurements received from different RRMs the CRRM derives the "Neighbour Cell CRRM Information" (distinguished per cell and per service) and sends it to all possibly affected RRM instances (neighbour cells in this sense are only those neighbour cells controlled by neighbour RRMs, since for cells of its own RRM no support is needed). This information is then used by the RRM in case of a handover (if cells of neighbour RRMs are involved) to prioritise the target cell.
- Load Target Setting Procedure (CRRM initiated): When a load target - which can dynamically be set by CRRM per cell - is exceeded, the serving RRM of the according cell takes autonomous RRM decisions based on the provided policy (Neighbour Cell CRRM Information, e.g. ranking of target cells). This concerns the following RRM decisions:

    - Handover due to load reasons.
    - Redirect due to load reasons.

    The procedure advises RRM to aim at a certain load level within a cell, however the resulting actions must not increase blocking and dropping rates for calls in the corresponding cell.

Cell capacity and load situation parameters managed by said procedures constitute the same number of Information Elements (IE) included in respective fields of relevant messages foreseen in the specifications. The following information is reported:

Information concerning GSM and UMTS cells (already available in RNSAP - **3GPP TS 25.423 v5.0.0 and 25.413 v5.0.0**):

- Cell Capacity Class Value: in order to compare the capacity available for user traffic within a cell among different operator' cells. Divided in two values (one for uplink, one for downlink): range: [1..100].
- Load Value: in order to define the total load in the cell, as a percentage of the capacity indicated by the Cell Capacity Class Value. Divided in two values (one for uplink, one for downlink): range: [0..100].
- RT Load Value: in order to define the load percentage due to RT services relative to the Load Value. Divided in two values (one for uplink, one for downlink): range: [0..100]. The NRT Load Value is not explicitly defined in the specification because directly obtainable by 100-RT Load.

-    NRT Load Information [0..3]. The abovementioned NRT Load Value [0..100] was not felt as sufficient, because of the characteristics of NRT traffic, that can tolerate delays and non continuous transmission. It was therefore decided to also define a NRT Load Information where the different values have the following meaning (the following definition for the Uplink NRT Load Information has been taken directly from 25.423 v5.2.0 as an example, however the same kind of definition applies to the Downlink NRT Load Information):

     0: low: The Uplink NRT load is low.
     1: medium: The Uplink NRT load is medium.
     2: high: Uplink NRT load is high. Probability to admit a
     new user is low.
     3: overloatied: Uplink NRT overload. The probability to admit a new user is low, packets are discarded and the source is recommended to reduce the data flow.

## OUTLINED TECHNICAL PROBLEM

In spite of the Release 5 solution and of the post-Release 5 "CRRM policy based approach", the Information Elements listed above, which are the only relevant ones since now standardised for traffic load management among several radio network controllers even of different RATs, are still insufficient to make the solution plenty effective. More precisely, by exchanging load information, one RNC can for example know about the RT load situation of a neighbouring GSM cell. However, the RNC will totally be unaware of the RT QoS in the neighbouring GSM cell: even if the GSM cell is using all of the resources for ongoing calls, it might be that these calls are being served with Full Rate (FR, 1 TS for each call) for delivering a better quality. In this case, the GSM cell would in fact still be able to accept calls, given that the QoS for a call can be downgraded to the Half Rate levels (HR, 1/2 TS for one call).

The same problem will happen in case of AMR (Adaptive Multi Rate) for both GSM and UMTS. In AMR there still exist Full Rate and Half Rate modes, and for each of those modes there exist different bit rates for voice coding and channel coding. Again, the total number of bits used by HR is half of the bits used by FR. The choice between HR and FR modes is based on channel quality and load condition in the cell. Again, cell load values can provide misleading information on the traffic conditions within the cell, as the bit rate (and QoS) provided to the user in case the cell is not fully loaded is higher than the bit rate (and QoS) that would be provided in case the cell is fully loaded (minimum guaranteed values).

For NRT services in both GSM and UMTS, a similar situation can happen. Example: NRT Load is high due to high throughput that the network is providing to the users due to spare resources within the cell. Nevertheless, this high throughput is much greater than the minimum guaranteed throughput that would be provided to those users in case the cell would be fully loaded. So, even if NRT Load is high, many NRT users can still be accepted in the cell.

Summarising, the actual cell capacity and load information (where 'load' refers to the actual capacity share that is being used) that is exchanged among RNCs/BSCs is not enough to give a sufficient picture about the actual resource utilisation in the neighbouring cells. The insufficient traffic load information, reported by the CRRM entity to a RRM entity, could drive the latter to issue erroneous or non-optimal handover decisions or cell reselections. The insufficient picture described above also affects the Load Target Setting Procedure initiated by the CRRM entity, upon load information received from the RRM entities that could fail to dynamically set reliable Load Targets.

## OBJECTS OF THE INVENTION

The main object of the present invention is that to overcome the drawbacks of the current standardisation concerning the Information Elements to be exchanged among various entities deputed to the traffic management upon a geographical area where cells of several Radio Access Technologies overlap.

Further object of the invention is that to provide more reliable Targets for the traffic management.

## SUMMARY AND ADVANTAGES OF THE INVENTION

To achieve said objects the subject of the present invention is a traffic load management method, as disclosed in claim 1.

In the disclosed method, in addition to the standardised Information Elements exchanged for the aim of cell load traffic management among RRM entities (via one or more CRRM entities), new Information Elements corresponding to service specific cell QoS Indicators are added up. That enables to distinguish the general service specific QoS situation in the cell. It is needed to remark that the cell based QoS management is totally missing in the current 2G and 3G standardisation, where only traffic-related parameters (i.e. cell capacity / load) are considered. The teaching of the invention is therefore fundamental in order to give significance to already existing load parameters. The great advantage of an overall and dynamical cell QoS management is that to take optimal decisions concerning handovers or cell reselections among different radio access network controllers. The optimal decision is a consequence of an improved strategy for balancing between RT and NRT traffic inside singular cells of a same RAT.

Further subject of the invention is a variant in which more reliable cell QoS Targets are calculated dynamically and forwarded to a centralised CRRM together with the Load Targets for traffic load management. QoS Targets can interwork with Load Targets: while Load Targets put limits on the maximum capacity to be used, QoS Targets set the quality. Referring to a particular cell and to a given service or group of services.

## BRIEF DESCRIPTION OF THE DRAWINGS

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:

- fig.1 (already described) shows a known diagram of a Multi-RAT (GSM + 3G) PLMN;
- fig.2 (already described) shows the UMTS signalling Control Plane;
- Figures 3, 4, 5, and 6 (already described) show some topologies for traffic management.

## DETAILED DESCRIPTION OF AN EMBODIMENT OF THE INVENTION

With reference to the **Figures 3** to **6**, in addition to the standardised Cell Load Information Elements exchanged for the aim of traffic management among RRM entities, via one or more CRRM entities, new Cell Information Elements corresponding to service specific QoS Indicators are added up. That enables to distinguish the general service specific QoS situation in the cell. Possible candidate services for calculating Cell QoS Indicators are the five GSM/GPRS classes:

- precedence class,
- delay class,
- reliability class,
- peak throughput class,
- mean throughput class; and

the four UMTS QoS traffic classes:

- conversational class,
- streaming class,
- interactive class,
- background class.

These classes can be grouped as groups of services, for example: RT traffic service including the UMTS Conversational and Streaming classes, and NRT traffic service including the UMTS Interactive and Background classes. Separated uplink and downlink values are considered for the Cell QoS indicators. Uplink is intended for transmissions from the UE to the Node B, or from the MS to the BTS. Downlink is intended the contrary direction of transmission. The range of each Cell QoS indicator encompasses a number INTEGER [1..N] indicating Cell QoS levels ranging from a minimum to a maximum. The Cell QoS parameters could be exchanged over existing interfaces (Iu, Iur, Iur-g, A, ...) or over new interfaces. Referring to the uplink (the same applies to the downlink), the Cell QoS Indicator for service X is obtained by a Cell Load Redundancy Factor for service X calculated by the following expression:

$$\text{Cell Load Redundancy Factor (X)} = \text{Actual Cell Load (X)} /$$

$$\text{Minimum Required Cell Load (X)}$$

where:

- the Minimum Required Cell Load (X) is a parameter that can be calculated in the network corresponding to the minimum user traffic load required in the cell in order to support the required services (X) with the minimum guaranteed QoS.; and
- the Actual Cell Load (X) is a dynamic parameter which corresponds to the measured user traffic load due to the service X, usually higher than the Minimum Required Cell Load (X).

The Cell Load Redundancy Factor for service X is also a dynamic parameter which assumes continuous values over the range of variability. The Cell QoS(X) shall instead assume the INTEGER [1..N] values, where N is defined (by the operator) in the whole network or at least inside a certain geographical area. This is obtained by a linear quantization of the values assumed by the Cell Load Redundancy Factor for service X. For example:

- Cell QoS (X) = 1 = Cell LRF(X) corresponds to the worst Cell QoS situation: the actual cell load for services X cannot be downgraded because it already equals the minimum required load, that corresponds to the minimum guaranteed Cell QoS for that service.
- Cell QoS(X) = N corresponds to the best Cell QoS situation for services X, that are served with higher quality (i.e. bit rate) than the minimum guaranteed quality (i.e. bit rate).

The Cell QoS for a group of services, or general to the whole services, has to correspond to a Cell LRF that is the weighted average of the Cell LRFs for the different services of the group or the whole services.

For example, assuming that the Cell Load Value = RT Cell Load Value = 100% for a given GSM cell, a RT Cell QoS Indicator would be able to discriminate whether or not further calls (e.g. incoming handovers) can be accepted by downgrading the Cell QoS for other calls (e.g. from Full Rate to Half Rate).

As a further example, we consider a GSM cell with a variable population of active mobiles, of which x% are HR capable. Given a Load Value for GSM calls = L, and given that all the mobiles are at the moment served by FR, we can say: Actual Cell Load (GSM calls) = L. Minimum Required Load (GSM calls) = ((100-x) * L) + (x * L/2))%; because the QoS cannot be downgraded for the (100-x)% MSs that are not HR capable. Cell LRF (GSM calls) is therefore defined from the above as a real number. The relationship is then defined between the discrete LRF and the discrete QoS indicator. Such QoS Indicators will be specially needed in future systems where every service will be carried over a packet based transport.

In operation, the method of the invention includes the following steps:

a) each radio network controllers (e.g. RNC, BSC) receives from the controlled cells or from the network relevant information to calculate the cell load parameters and the cell QoS Indicators for each service and/or group of services or the whole services provided in the controlled cells;

b) the calculated values of the cell load parameters and the cell QoS Indicators are included into respective Information Element fields of one or more messages sent to the neighbouring radio network controllers (the controllers of the neighbouring cells) of the same or another radio access technology, in order for the latter to know upon the reception about the actual neighbouring traffic situation with respect to each service or group of services;

c) the received Information Elements are checked by the radio network controllers to have indication on the opportunity to issue or prevent handover or cell reselection commands towards the cells of the neighbouring radio network controllers of the same or another radio access technology.

Now a variant of the method is considered. The aim is that to provide more reliable Targets for traffic load management, together with the usual Cell Load Targets. The variant starts from considering the Cell QoS Indicators calculated according to the preceding method. In a non-limiting scenario, we assume having a number of RRM entities providing Cell Load values and cell QoS Indicators to a centralised CRRM entity. The centralised CRRM entity will take into account the current Cell Load and Cell QoS situations in all the cells, and may therefore set appropriate Cell QoS Targets for the RRM entities, in order to request the latter to aim at Cell QoS Indicators = Cell QoS Targets. The QoS Targets are defined in the same way (and have the same relationship with Cell LRF) than Cell QoS Indicators. The QoS Targets are exchanged over existing interfaces (Iu, Iur, Iur-g, A, ...) or over new interfaces. The basic meaning of a Cell QoS Target given by CRRM to RRM for a given service or group of services or the whole services is that RRM has to adapt (or try to adapt) its Cell QoS Indicators to said QoS targets. This allows for a common QoS control among the overlapping resource pools. Cell QoS Targets interwork with Cell Load Targets: while the latter put limits on the maximum capacity to be used, Cell QoS Targets set the quality. Referring to a particular cell and to a given service or group of services or the whole services, and to uplink (or downlink): If a Cell Load Target is not fulfilled, a load reason handover / NCCR (Network Controlled Cell Reselection) is considered only if the Cell QoS Indicator is not greater than the Cell QoS target, otherwise the Cell QoS is downgraded by downgrading the QoS of singular links or services.

The benefits of Cell QoS Targets are comparable to (or represent a part of) the benefits of Cell Load Targets, as they allow for resource sharing and co-ordination among overlapping radio resource pools. Cell QoS Targets are a natural complement of - and a needed supplement to - Cell Load Targets. For example, given a congested situation cell A, plus a congestion situation in the overlapping cells and incoming handovers in cell A, CRRM decides to keep/accept RT calls in cell A instead of trying to handover them to overlapping cells or rejecting incoming handovers, even if the RT service will be provided with downgraded QoS in cell A.

**Claims**

1. Traffic load management method performed by each radio network controller (RNC, BSC) of a mobile communication network using one or more radio access technologies (GSM , UTRAN) that overlap over the same geographic area, including the steps of:

   a) receiving from the controlled cells and from the network information relevant to the user traffic and the Quality of Service QoS;
   b) calculating Cell Load parameters for user traffic and including them in the same number of Information Element fields of one or more messages sent to the other radio network controllers of the neighbouring cells having the same or another radio access technology;
   c) checking the traffic-related Information Elements coming from said other radio network controllers (BSC, RNC) in order to decide of issuing handovers or cell reselection commands directed to the neighbouring domains;

   **characterised in that**:

   - during said calculating step b), Cell Load Redundancy Factors are calculated for each service or group of services or the whole services provided in the cell;
   - the Cell Load Redundancy Factors are linearly quantized for obtaining Cell QoS Indicators included in additional Information Element fields of said message/s;
   - during said checking step c), the additional Information Elements coming from said other radio network controllers (BSC, RNC) are checked in order to have supplementary indications for issuing or preventing said handovers or cell reselection commands.

2. Traffic load management method in accordance with claim 1, **characterised in that** the Cell Load Redundancy Factors are calculated for uplink and downlink transmissions separately.

3. Traffic load management method in accordance with claim 1 or 2, **characterised in that** the Cell Load Redundancy Factor for a service X, being X a type of service or a group of services or the whole services provided in the cell, is calculated dividing an Actual Cell Load for the service X by a Minimum Required Cell Load for the service X, where:

   • the Minimum Required Cell Load for the service X is a parameter corresponding to the minimum user traffic load required in the cell in order to support the required services X with the minimum guaranteed QoS;
   • the Actual Cell Load for the service X is a dynamic parameter corresponding to the measured user traffic load in the cell due to the service X.

4. Traffic load management method in accordance with any preceding claim, **characterised in that** the range of each Cell QoS Indicator encompasses an integer spanning from 1 to N for indicating the same number of Cell QoS levels ranging from a minimum to a maximum, where N being defined in the whole network or at least inside a certain geographical area.

5. Traffic load management method in accordance with claim 3, **characterised in that** the Cell Load Redundancy Factor for a group of services is obtained from the weighted average of the Load Redundancy Factors for the different services X of the group.

6. Traffic load management method in accordance with claim 3, **characterised in that** the Cell Load Redundancy Factor for the whole services is obtained from the weighted average of the Cell Load Redundancy Factors for the different services X of the cell.

7. Traffic load management method in accordance with claim 1, **characterised in that** at step b) said radio network controllers (RRM) supply a centralised radio network controller (CRRM, CRRM server) operating for the whole network, or at least inside a certain geographical area, with said Cell Load and Cell QoS Indicators, in order to enable the centralised controller to set appropriate Cell QoS Targets in addition to Cell Load Targets set for each satellite radio network controller (RRM).

**8.** Traffic load management method in accordance with claim 7, **characterised in that** the Cell QoS Targets correspond to the Cell QoS Indicators for a service, a group of services, or the whole services.

**9.** Traffic load management method in accordance with claim 8, **characterised in that** at step c) each satellite radio network controller (RRM) adapts the QoS of the cells to the received Cell QoS Targets.

**Patentansprüche**

**1.** Verfahren für Verkehrslastmanagement, welches von jeder Funknetzsteuerung (RNC, Radio Network Controller; BSC, Base Station Controller) in einem Mobilfunknetz ausgeführt wird, wobei eine oder mehrere Funkzugangstechnologie(n) (GSM, UTRAN) zum Einsatz kommt/kommen, die sich in demselben geografischen Gebiet überlappen, und wobei das Verfahren folgende Schritte umfasst:

a) Empfangen von Informationen, die für den Anwenderverkehr und für die Dienstgüte (QOS, Quality of Service) relevant sind, von den kontrollierten Zellen und vom Netz;
b) Berechnen von Zelllast-Parametern für den Anwenderverkehr und Eintragen in dieselbe Anzahl von Informationselement-Feldern einer oder mehrerer Nachricht(en), die an die anderen Funknetzsteuerungen der benachbarten Zellen, welche dieselbe oder eine andere Funkzugangstechnologie aufweisen, gesendet wird/werden;
c) Prüfen der verkehrsbezogenen Informationselemente, die von den besagten anderen Funknetzsteuerungen (BSC, RNC) eingehen, um zu entscheiden, ob Kommandos zur Übergabe (Handover) oder Zellenneuwahl an die benachbarten Domänen ausgegeben werden sollen;

**dadurch gekennzeichnet, dass**:

- während des besagten Berechnungsschritts b) Zelllast-Redundanzfaktoren für jeden Dienst bzw. für jede Gruppe von Diensten bzw. für die Gesamtheit der Dienste, der/die in der Zelle bereitgestellt wird/werden, berechnet werden;
- die Zelllast-Redundanzfaktoren linear quantisiert werden, um QoS-Indikatoren für die Zelle zu erhalten, die in zusätzlichen Informationselement-Feldern der besagten Nachricht(en) enthalten sind;
- während des besagten Prüfungsschritts c) die zusätzlichen Informationselemente geprüft werden, die von den besagten anderen Funknetzsteuerungen (BSC, RNC) kommen, um ergänzende Angaben für die Ausgabe bzw. für die Verhinderung von Kommandos zur Übergabe oder Zellenneuwahl zu erhalten.

**2.** Verfahren für Verkehrslastmanagement gemäß Anspruch 1, **dadurch gekennzeichnet, dass** die Zelllast-Redundanzfaktoren für die Übertragung in Aufwärtsrichtung und in Abwärtsrichtung getrennt voneinander berechnet werden.

**3.** Verfahren für Verkehrslastmanagement gemäß Anspruch 1 oder 2, **dadurch gekennzeichnet, dass** der Zelllast-Redundanzfaktor für einen Dienst X, wobei X eine Art von Dienst oder eine Gruppe von Diensten oder die Gesamtheit der Dienste, welche in der Zelle bereitgestellt werden, bezeichnet, **dadurch** berechnet wird, dass eine tatsächliche Zelllast für den Dienst X durch eine minimal erforderliche Zelllast für den Dienst X geteilt wird, wobei:

- die minimal erforderliche Zelllast für den Dienst X ein Parameter ist, der der minimalen Anwenderverkehrslast entspricht, die in der Zelle benötigt wird, um die geforderten Dienste X mit der minimalen garantierten QoS zu unterstützen;
- die tatsächliche Zelllast für den Dienst X ein dynamischer Parameter ist, der der gemessenen Anwenderverkehrslast in der Zelle aufgrund des Dienstes X entspricht.

**4.** Verfahren für Verkehrslastmanagement gemäß einem der vorstehenden Ansprüche, **dadurch gekennzeichnet, dass** der Wertebereich jedes QoS-Indikators für eine Zelle eine ganze Zahl von 1 bis N umfasst, um dieselbe Anzahl von QoS-Werten für die Zelle von einem Minimalwert bis zu einem Maximalwert anzugeben, wobei N im gesamten Netz oder mindestens innerhalb eines bestimmten geografischen Bereichs definiert ist.

5. Verfahren für Verkehrslastmanagement gemäß Anspruch 3, **dadurch gekennzeichnet, dass** der Zelllast-Redundanzfaktor für eine Gruppe von Diensten aus dem gewichteten Durchschnittswert der Zelllast-Redundanzfaktoren für die verschiedenen Dienste X der Gruppe gewonnen wird.

6. Verfahren für Verkehrslastmanagement gemäß Anspruch 3, **dadurch gekennzeichnet, dass** der Zelllast-Redundanzfaktor für die Gesamtheit der Dienste aus dem gewichteten Durchschnittswert der Zelllast-Redundanzfaktoren für die verschiedenen Dienste X der Gruppe gewonnen wird.

7. Verfahren für Verkehrslastmanagement gemäß Anspruch 1, **dadurch gekennzeichnet, dass** in Schritt b) die besagten Funknetzsteuerungen (RRM) einer zentralisierten Funknetzsteuerung (CRRM, CRRM-Server), die für das gesamte Netz oder mindestens innerhalb eines bestimmten geografischen Bereichs aktiv ist, die besagten Indikatoren für Zelllast und Zell-QoS bereitstellen, um die zentralisierte Steuerung in die Lage zu versetzen, geeignete Sollwerte für die QoS der Zelle zusätzlich zu den Sollwerten für die Zelllast, die für jede Satelliten-Funknetzsteuerung (RRM) festgelegt sind, zu definieren.

8. Verfahren für Verkehrslastmanagement gemäß Anspruch 7, **dadurch gekennzeichnet, dass** die Sollwerte für die QoS der Zelle den QoS-Indikatoren für die Zelle für einen Dienst, für eine Gruppe von Diensten bzw. für die Gesamtheit der Dienste entsprechen.

9. Verfahren für Verkehrslastmanagement gemäß Anspruch 8, **dadurch gekennzeichnet, dass** in Schritt c) jede Satelliten-Funknetzsteuerung (RRM) die QoS der Zellen den empfangenen Sollwerten für die Qos der Zelle anpasst.

## Revendications

1. Procédé de gestion de charge de trafic exécuté par chaque régisseur de réseau radiotéléphonique (RNC, BSC) d'un réseau de télécommunications mobiles utilisant une ou plusieurs technologies d'accès radio (GSM, UTRAN) qui se chevauchent sur la même aire géographique, comprenant les étapes consistant à :

   a) recevoir des cellules régies et du réseau dés informations relatives au trafic des abonnés et à la qualité du service (QoS) ;
   b) calculer les paramètres de charge de cellule pour le trafic des abonnés et les inclure dans le même nombre de champs formant éléments d'informations d'un ou de plusieurs messages envoyés aux autres régisseurs de réseau radiotéléphonique des cellules voisines ayant la même ou une autre technologie d'accès radio ;
   c) vérifier les éléments d'informations relatifs au trafic provenant desdits autres régisseurs de réseau radiotéléphonique (BSC, RNC) afin de décider d'émettre des commandes de transfert cellulaire ou de resélection de cellule adressées aux domaines voisins ;

   **caractérisé en ce que** :

   - durant ladite étape b) de calcul, des facteurs de redondance de charge de cellule sont calculés pour chaque service ou groupe de services ou pour l'ensemble des services prestés dans la cellule ;
   - les facteurs de redondance de charge de cellule sont quantifiés linéairement pour obtenir des indicateurs de QoS de cellule inclus dans des champs formant éléments d'informations supplémentaires dudit ou desdits messages ;
   - durant ladite étape c) de vérification, les éléments d'informations supplémentaires émanant desdits autres régisseurs de réseau radiotéléphonique (BSC, RNC) sont vérifiés afin d'avoir des indications supplémentaires pour émettre ou bloquer lesdites commandes de transfert cellulaire ou de resélection de cellule.

2. Procédé de gestion de charge de trafic selon la revendication 1, **caractérisé en ce que** les facteurs de redondance de charge de cellule sont calculés séparément pour les transmissions vers l'amont et vers l'aval.

3. Procédé de gestion de charge de trafic selon la revendication 1 ou 2, **caractérisé en ce que** le facteur de redondance de charge de cellule pour un service X, X étant un type de service ou un groupe de services ou l'ensemble des services prestés dans la cellule, est calculé en divisant une charge de cellule réelle pour le service X par une charge minimale requise de cellule pour le service X, sachant que :

   • la charge minimale requise de cellule pour le service X est un paramètre correspondant à la charge minimale de trafic d'abonnés requise dans la cellule afin de prendre en charge les services X requis avec la QoS minimale garantie ;

• la charge de cellule réelle pour le service X est un paramètre dynamique correspondant à la charge mesurée de trafic d'abonnés dans la cellule due au service X.

4. Procédé de gestion de charge de trafic selon l'une quelconque des revendications précédentes, **caractérisé en ce que** la plage de chaque indicateur de QoS de cellule couvre une fourchette d'entiers s'échelonnant de 1 à N pour indiquer le même nombre de niveaux de QoS de cellule allant d'un minimum à un maximum, N étant défini dans l'ensemble du réseau ou au moins à l'intérieur d'une certaine aire géographique.

5. Procédé de gestion de charge de trafic selon la revendication 3, **caractérisé en ce que** le facteur de redondance de charge de cellule pour un groupe de services s'obtient à partir de la moyenne pondérée des facteurs de redondance de charge pour les différents services X du groupe.

6. Procédé de gestion de charge de trafic selon la revendication 3, **caractérisé en ce que** le facteur de redondance de charge de cellule pour l'ensemble des services s'obtient à partir de la moyenne pondérée des facteurs de redondance de charge de cellule pour les différents services X de la cellule.

7. Procédé de gestion de charge de trafic selon la revendication 1, **caractérisé en ce que**, à l'étape b), lesdits régisseurs de réseau radiotéléphonique (RRM) fournissent à un régisseur centralisé de réseau radiotéléphonique (CRRM, serveur CRRM) opérant pour l'ensemble du réseau ou au moins à l'intérieur d'une certaine aire géographique, lesdits indicateurs de charge de cellule et de QoS de cellule afin de permettre au régisseur centralisé de définir des objectifs appropriés de QoS de cellule en plus des objectifs de charge de cellule définis pour chaque régisseur satellite de réseau radiotéléphonique (RRM).

8. Procédé de gestion de charge de trafic selon la revendication 7, **caractérisé en ce que** les objectifs de QoS de cellule correspondent aux indicateurs de QoS de cellule pour un service, un groupe de services ou l'ensemble des services.

9. Procédé de gestion de charge de trafic selon la revendication 8, **caractérisé en ce que**, à l'étape c), chaque régisseur satellite de réseau radiotéléphonique (RRM) adapte le QoS des cellules aux objectifs de QoS de cellule reçus.

FIG. 1

MULTI-RAT (GSM + 3G) PLMN

PSTN ISDN IP X.25

CN

CORE NETWORK

GMSC — E — MSC / VLR — A

C/D — HLR AuC — $G_c$

F — EIR

$G_s$ — CSE — $G_f$

$G_i$ — GGSN — $G_n$ — SGSN

$G_r$

IWF / TC

$I_{u(CS)}$  $I_{u(PS)}$

GSM BSS

OMC

TRAU — $G_b$

BSC

BTS — $A_{bis}$ — BTS

UTRAN RNS

OMC

RNC — $I_{ur}$

RNC

$I_{ub}$

Node B  Node B  Node B

$U_m$  $U_u$

UE = ME + USIM

# UMTS CS & PS Control Plane  (KNOWN ART)

FIG. 2

EP 1 418 782 B1

# Inter-RAT Topologies for Traffic Management
## (Known Art for the only exchange of standard Information Elements)

**FIG.3**

**FIG. 4**

- - - ▶ Reporting Information

◀━━▶ RRM Decision Support

◀┄┄┄▷ Configuration Information
Exchange (O&M)

**FIG.5**

**FIG.6**

EP 1 418 782 B1